# EUROPEAN PATENT SPECIFICATION

(11) **EP 4 042 253 B1**
(45) Date of publication and mention of the grant of the patent: **17.07.2024**
(21) Application number: 21840412.7
(22) Date of filing: 27.12.2021
(51) Int. Cl.: G05D 1/00

(54) **METHOD, SYSTEM, COMPUTER PROGRAM AND COMPUTER PROGRAM PRODUCT FOR CONTROLLING A ROBOTIC GARDEN TOOL**
VERFAHREN, SYSTEM, COMPUTERPROGRAMM UND COMPUTERPROGRAMMPRODUKT ZUR STEUERUNG EINES ROBOTISCHEN GARTENWERKZEUGS
PROCÉDÉ, SYSTÈME, PROGRAMME INFORMATIQUE ET PRODUIT DE PROGRAMME INFORMATIQUE POUR COMMANDER UN OUTIL DE JARDIN ROBOTISÉ

(30) Priority: 30.12.2020 CN 202011606822; 30.12.2020 CN 202023283031 U
(43) Date of publication of application: 17.08.2022
(73) Proprietor: Globe (Jiangsu) Co., Ltd., Zhonglou District Changzhou, Jiangsu 213023 (CN)
(72) Inventor: WALLMARK, Carl, Changzhou, Jiangsu 213023 (CN)
(74) Representative: Bergenstråhle & Partners AB
(86) International application number: PCT/CN2021/141570
(87) International publication number: WO 2022/143507

(56) References cited:
- WO-A1-2019/144867
- WO-A1-2019/194632
- CN-A- 105 955 267
- CN-A- 109 634 287
- CN-A- 112 703 881
- CN-U- 214 338 686
- US-A1- 2010 049 374
- US-A1- 2010 152 944
- US-A1- 2016 091 898

## Description

### Technical field

The present invention relates to a method, system, computer program and computer program product for controlling a robotic garden tool.

### Background

Robotic garden tools found on the market are generally known to be used for mowing the lawn or for cleaning the swimming pool, among other garden activities. To keep the robotic garden tool within a certain working area or to bring back the robotic garden tool to a charging station, boundary wires and other type of guide wires in combination with different antennas have been used. There are different types of methods for covering a specific working area, for instance letting the robotic garden tool work on a random basis.

Installing said peripherals of the robotic garden tools, such as boundary wires, guide wires etc. takes a relatively large effort of the user prior initiating the system. These peripherals are furthermore likely to be damaged by external factors at least once during the lifecycle of the system.

Having a method implemented wherein the robotic garden tool randomly moves within the working area will result in the area eventually being covered. However, this approach is not an optimal method with regards to time required nor energy efficiency.

US2016/091898 discloses systems and methods for controlling the steering of a machine such as a mower. A control system may comprise a unitary structure such as a tablet computer and may be removably attached with the machine. The control system tracks the movement of the machine over an area using GPS systems or the like and then automatically calculates, stores, and transmits optimized travel paths that minimize the distance travelled by the machine for subsequent movements of the machine over the same area. The system may automatically detect excluded areas within the area and may automatically update optimized travel paths during subsequent uses at the option of a user. Path data and other information may be stored remotely, and access thereto controlled by a service provider.

WO2019/194632 discloses a mobile robot comprising a body forming an external appearance; a travelling unit for moving the body; a boundary signal sensing unit for sensing a boundary signal generated in a boundary area of a travelling area; and a control unit for controlling the travelling unit to perform pattern travelling in the travelling area at multiple times, and controlling a travelling angle of first pattern travelling and a travelling angle of second pattern travelling to be different from each other. Therefore, when pattern travelling is performed multiple times, the mobile robot moves at different angles with respect to a reference axis to minimize an area which fails to be mowed, so as to improve the efficiency.

WO2019/144867 discloses a method for improving the corner coverage rate of a moving robot. A moving robot at a predetermined location sets out according to a preset direction and covers a designated area at least two times according to a path planning algorithm. At least two preset directions are comprised. The moving robot is enabled to enter a corner area from a plurality of angles when operating according to the preset path planning algorithm by means of adjusting the motion direction of the moving robot when starting operations, and the robot may thus cover more corner areas.

It is therefore desirable to accomplish a method and a system for controlling a robotic garden tool in an improved manner.

### Summary of invention

An objective of the present invention is thus to accomplish a method and a system for controlling a robotic garden tool in an improved manner.

According to one aspect, the invention concerns a method performed by a robotic garden system for controlling a robotic garden tool. The system comprises the robotic garden tool, a control unit, and a database. The method comprises the step of retrieving, from the database by means of the control unit, a predetermined route for the robotic garden tool. The predetermined route is within a working area. The predetermined route is stored in a route data set in the database. The predetermined route is based on a travel angle. The travel angle is an angle extending from a starting point for the robotic garden tool located within the working area. The working area delimits the travel of the robotic garden tool. The route data set comprises a plurality of predetermined routes. Each predetermined route has a travel angle substantially being different from all other travel angles of all other predetermined routes. The method further comprises the step of controlling by means of the control unit the robotic garden tool to start from the starting point and move along the retrieved predetermined route.

Using different predetermined routes having travel angles being different from all other travel angles of all other predetermined routes, provides a solution which will prevent permanent marks or unnecessary wear on the surface. If the robotic tool is a robotic lawn mower permanent tracks in the lawn will be prevented. Furthermore, different patterns in a lawn can be created if the robotic garden tool is a lawn mower.

The method above may be configured according to different optional embodiments. For example, the method may be preceded by the steps of defining the working area, and storing in the database a plurality of geographical data points defining the working area.

By defining the working area with geographical data points, the working area can be defined for every specific installation once and the working area described in geographical data points can be retrieved for every future work session.

According to an embodiment of the invention the method may further comprise the step of controlling the robotic garden tool by means of the control unit to follow the defined and stored working area before conducting any further activities, such that the user can confirm that the stored working area is correct.

By letting the user confirm the stored working area prior activating the robotic garden tool functions as a strong control mechanism counteracting ill defined working areas. This functionality could prevent accidents as well as damages to humans and property.

According to an embodiment of the invention the defining of the working area may comprise defining the boundary of the working area.

The boundary is an essential element of the working area and the definition of this would thus be of great importance.

According to an embodiment of the invention the defining of the boundary step may comprise controlling the robotic garden tool by means of the control unit to follow the boundary of the working area.

To control the robotic garden tool to physically follow the boundary of the working area is a very efficient and secure way of defining the same.

According to an embodiment of the invention the defining step of the working area may comprise defining the boundary of an obstacle of the working area.

An obstacle is an essential element of the working area and the definition of this would thus be of great importance.

According to the invention, in the retrieving step of a predetermined route, the predetermined route is selected based on a criterion of minimising the number of turns of the robotic garden tool within the working area.

By using a method where the predetermined route is selected based on the criterion of minimising the number of turns of the robotic garden tool within the working area, may be a valuable contribution to fully cover the working area, and to do so as swiftly as possible. This will imply that both the environmental impact of using the robotic garden tool and the stress on the mechanics of the robotic garden tool will be decreased.

According to an embodiment of the invention the travel angle may be in the range of 0 to 180° or in the range of 0 to 360°.

Having the possibility to choose between two said intervals will provide both a very efficient and a very flexible path planning.

According to an embodiment of the invention a positioning unit may be in combination with the control unit used for controlling the robotic garden tool to follow the retrieved predetermined route, and/or the positioning unit may be used for providing a plurality of geographical data points so that the working area may be defined.

Using such a positioning unit may provide a very accurate control functionality and a very accurate definition functionality of the working area.

According to an embodiment of the invention the method further comprises to retrieve a signal by the control unit. The signal indicates that the robotic garden tool should move to a predetermined position. Further, the method comprises to store in the database a geographical data point corresponding to the current geographical position of the robotic garden tool, to control the robotic garden tool by means of the control unit to move to the predetermined position, to control the robotic garden tool by means of the control unit to conduct a certain activity at the predetermined position, to control the robotic garden tool by means of the control unit to return to the geographical position corresponding to stored geographical data point after said certain activity at the predetermined position has been completed, and to control the robotic garden tool by means of the control unit to continue to move along the retrieved predetermined route.

Described method provides the possibility for the robotic garden tool to pause its current tasks, in order for another important activity to be conducted, and subsequently to resume its tasks.

According to an embodiment of the invention the controlling step of the robotic garden tool to follow the retrieved predetermined route may comprise for the robotic garden tool by means of the control unit to move along the travel angle in a straight line, turn when reaching the boundary of the working area, move opposite the travel angle in a straight line, turn when reaching the boundary of the working area, move along the travel angle in a straight line, and continue with said steps, such that the robotic garden tool covers the working area lane by lane.

Described method provides the possibility to cover the total working area fully in an even more efficient manner. Furthermore, different patterns in a lawn can even more efficiently be created if the robotic garden tool is a lawn mower.

According to one aspect, the invention concerns a robotic garden system for controlling a robotic garden tool. The system comprises the robotic garden tool, a control unit, and a database. The system is arranged to retrieve, from the database by means of the control unit, a predetermined route for the robotic garden tool. The predetermined route is within a working area. The predetermined route is stored in a route data set in the database. The predetermined route is based on a travel angle. The travel angle is an angle extending from a starting point for the robotic garden tool located within the working area. The working area delimits the travel of the robotic garden tool. The route data set comprises a plurality of predetermined routes, and each predetermined route has a travel angle substantially being different from all other travel angles of all other predetermined routes. Further, the system is arranged to control by means of the control unit the robotic garden tool to start from the starting point and move along the retrieved predetermined route. Further, the system is arranged for retrieving the predetermined route by selecting the predetermined route based on a criterion of minimising the number of turns of the robotic garden tool within the working area.

Such a system, using different predetermined routes having travel angles being different from all other travel angles of all other predetermined routes, provides a solution which will prevent permanent marks or unnecessary wear on the surface. If the robotic tool is a robotic lawn mower permanent tracks in the lawn will be prevented. Furthermore, different patterns in a lawn can be created if the robotic garden tool is a lawn mower.

According to another aspect a computer program comprises computer readable code means, which when run on a control unit causes the system to perform the corresponding method.

According to another aspect a computer program product comprises a computer readable medium and a computer program. The computer program is stored on the computer readable medium.

The robotic garden tool may be a robotic lawn mower, among others.

The control unit may be located internally or externally of the robotic garden tool. If located externally it could be located at a charging station of the robotic garden tool, among others.

The database may either be located externally outside the robotic garden tool, for instance in a cloud solution among others, or internally in a physical data storage device within the robotic garden tool.

The working area may be a sub area of a larger working area.

A plurality of working areas may overlap each other.

The positioning unit may be a GNSS device, such as a GPS device, an RTK device, among others.

The predetermined position may be the position of a charging station, a station for downloading data, among others.

The certain activity may for instance be an activity focused on charging the batteries of the robotic garden tool, on updating the software of the robotic garden tool, or waiting for a specific manual maintenance of the robotic garden tool to be conducted, among others.

When the robotic garden tool turns and follows the next lane opposite the travel angle the robotic garden tool may either slightly overlap the previous lane or not overlap the previous lane at all. The latter could be accomplished by controlling the robotic garden tool to border the previous lane. Different working widths of different robotic garden tools would have to be considered for calculating the desired outcome.

The travel angle may be determined randomly or according to a predetermined schedule.

Prior the robotic garden tool starts to move along the retrieved predetermined route, information regarding the route, such as travel time among others, could be sent to the owner/user of the robotic garden tool for the owner/user to either accept or decline initiation of the specific predetermined route.

The positioning unit in combination with the control unit may be used for controlling the robotic garden tool to follow the retrieved predetermined route for all described claims, and also for defining the working area for all described claims, for enabling storing in the database the plurality of geographical data points defining the working area.

### Brief description of drawings

The invention is now described, by way of example, with reference to the accompanying drawings, in which:
Fig. 1 is a flow chart of a procedure according to an embodiment.
Fig. 2 is a flow chart of a procedure according to an embodiment.
Fig. 3 is a flow chart of a procedure according to an embodiment.
Fig. 4 is a flow chart of a procedure according to an embodiment.
Fig. 5 is a flow chart of a procedure according to an embodiment.
Fig. 6 is a block diagram illustrating a control unit, according to a possible embodiment.
Fig. 7 is a block diagram illustrating a robotic garden system in connection with a user, according to a possible embodiment.
Fig. 8 shows a robotic garden tool in connection with its surroundings in a schematic view, according to an embodiment of the invention, and
Fig. 9 shows a predetermined route in a perspective view, according to an embodiment of the invention, and
Fig. 10 shows a predetermined route in a perspective view, according to an embodiment of the invention, and
Fig.11 shows a predetermined route in a perspective view, according to an embodiment of the invention, and
Fig. 12 shows a predetermined route in a perspective view, according to an embodiment of the invention.

### Description of embodiments

In the following, a detailed description of a method, system, computer program and computer program product for controlling a robotic garden tool, is provided.

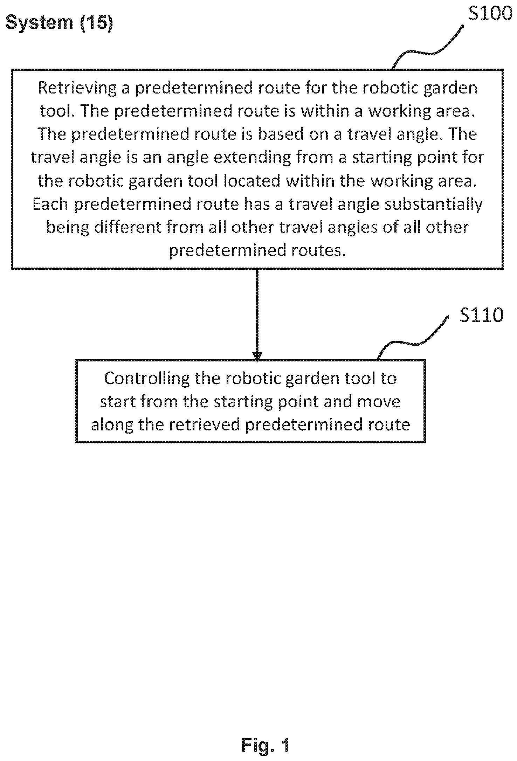

Fig. 1 shows a flow chart illustrating a procedure in a system. The various actions may come in different orders than presented in this description, or in a different order than shown in this or other flowcharts related to this description, or some steps may be performed in parallel.

In a step S100 a predetermined route 3 for the robotic garden tool 1 is retrieved from the database 2 by means of the control unit 13. The predetermined route 3 is within a working area 4. The predetermined route 3 is stored in a route data set in the database 2. The predetermined route 3 is based on a travel angle 6. The travel angle 6 is an angle extending from a starting point 7 for the robotic garden tool 1 located within the working area 4, and the working area 4 delimits the travel of the robotic garden tool 1. The route data set comprises a plurality of predetermined routes 3, and each predetermined route 3 has a travel angle 6 substantially being different from all other travel angles of all other predetermined routes. Further the robotic garden tool 1 is controlled by means of the control unit 13 to start from the starting point 7 and move along the retrieved predetermined route 3. In a step S110 the robotic garden tool 1 is controlled by means of the control unit 13 to start from the starting point 7 and to move along the retrieved predetermined route 3.

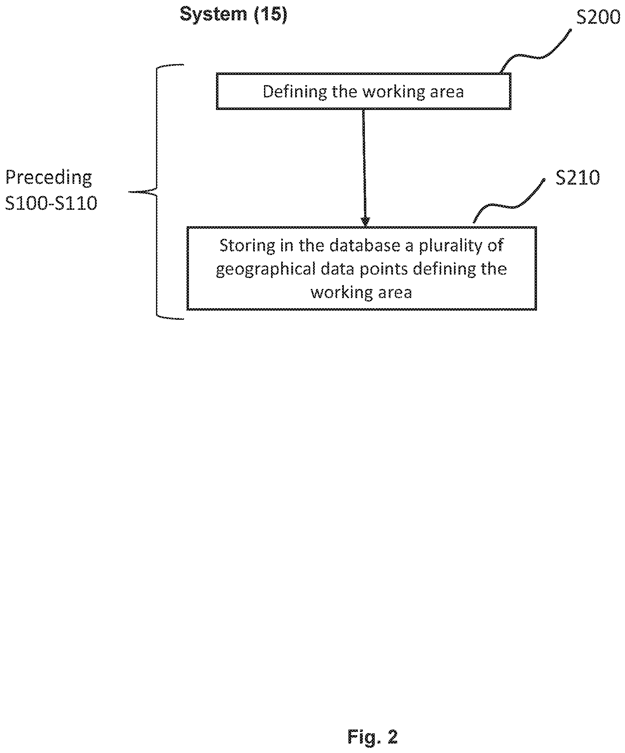

Fig. 2 shows a flow chart illustrating a procedure in a system. The various actions may come in different orders than presented in this description, or in a different order than shown in this or other flowcharts related to this description, or some steps may be performed in parallel.

In a step S200 the working area 4 is defined. In a step S210 a plurality of geographical data points defining the working area 4 is stored in the database 2.

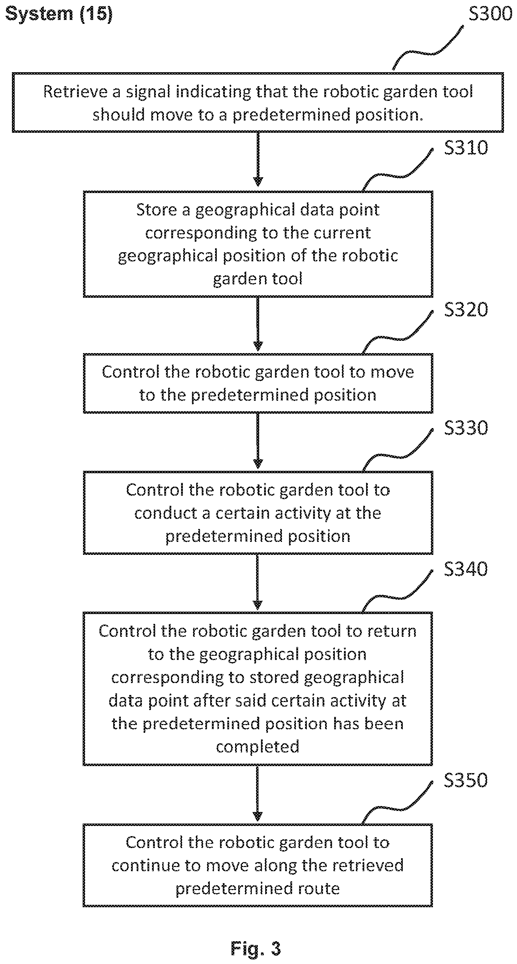

Fig. 3 shows a flow chart illustrating a procedure in a system. The various actions may come in different orders than presented in this description, or in a different order than shown in this or other flowcharts related to this description, or some steps may be performed in parallel.

In a step S300 a signal is retrieved by the control unit. The signal indicates that the robotic garden tool 1 should move to a predetermined position 14. In a step S310 a geographical data point corresponding to the current geographical position of the robotic garden tool 1 is stored in the database 2. In a step S320 the robotic garden tool 1 is controlled by means of the control unit 13 to move to the predetermined position 14. In a step S330 the robotic garden tool 1 is controlled by means of the control unit 13 to conduct a certain activity at the predetermined position 14. In a step S340 the robotic garden tool 1 is controlled by means of the control unit 13 to return to the geographical position corresponding to stored geographical data point after said certain activity at the predetermined position 14 has been completed. In a step S350 the robotic garden tool 1 is controlled by means of the control unit 13 to continue to move along the retrieved predetermined route 3.

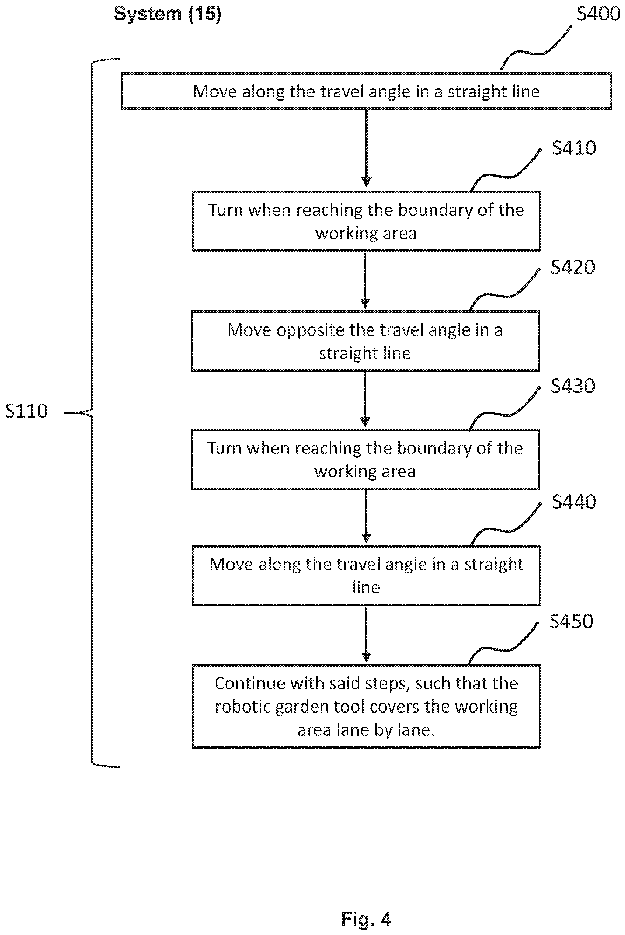

Fig. 4 shows a flow chart illustrating a procedure in a system. The various actions may come in different orders than presented in this description, or in a different order than shown in this or other flowcharts related to this description, or some steps may be performed in parallel.

In a step S400 the robotic garden tool 1 is controlled by means of the control unit 13 to move along the travel angle 6 in a straight line. In a step S410 the robotic garden tool 1 is controlled by means of the control unit 13 to turn when reaching the boundary 9 of the working area 4. In a step S420 the robotic garden tool 1 is controlled by means of the control unit 13 to move opposite the travel angle 6 in a straight line. In a step S430 the robotic garden tool 1 is controlled by means of the control unit 13 to turn when reaching the boundary 9 of the working area 4. In a step S440 the robotic garden tool 1 is controlled by means of the control unit 13 to move along the travel angle 6 in a straight line and continue with said steps such that the robotic garden tool 1 covers the working area 4 lane by lane.

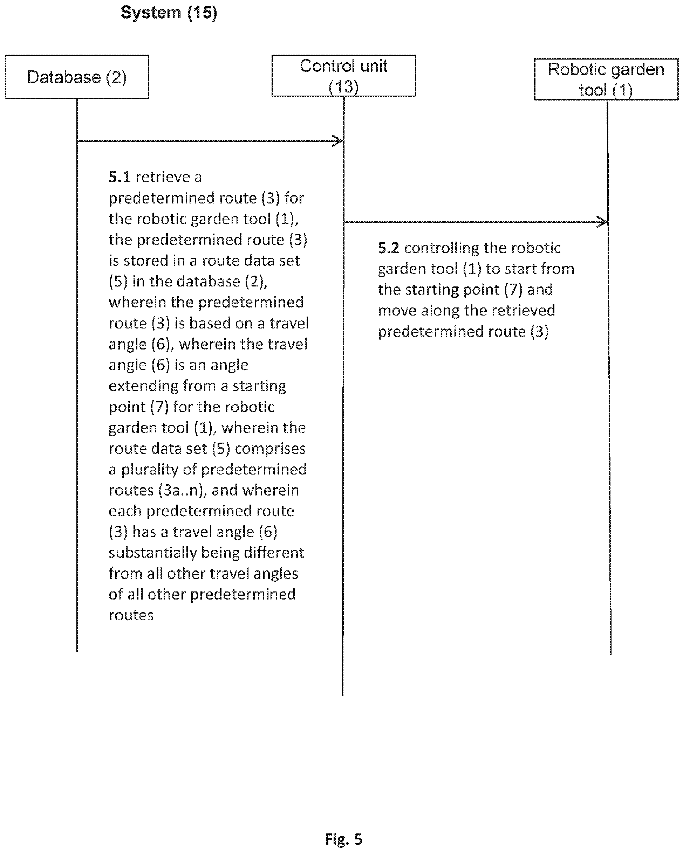

Fig. 5 shows a flow chart illustrating a procedure in a system. The various actions may come in different orders than presented in this description, or in a different order than shown in this or other flowcharts related to this description, or some steps may be performed in parallel.

In a step 1.1 a predetermined route 3 for the robotic garden tool 1 is retrieved from the database 2 by means of the control unit 13. The predetermined route 3 is within a working area 4. The predetermined route 3 is stored in a route data set in the database 2. The predetermined route 3 is based on a travel angle 6. The travel angle 6 is an angle extending from a starting point 7 for the robotic garden tool 1 located within the working area 4, and the working area 4 delimits the travel of the robotic garden tool 1. The route data set comprises a plurality of predetermined routes 3, and each predetermined route 3 has a travel angle 6 substantially being different from all other travel angles of all other predetermined routes. In a step 1.2 the robotic garden tool 1 is controlled by means of the control unit 13 to start from the starting point 7 and to move along the retrieved predetermined route 3.

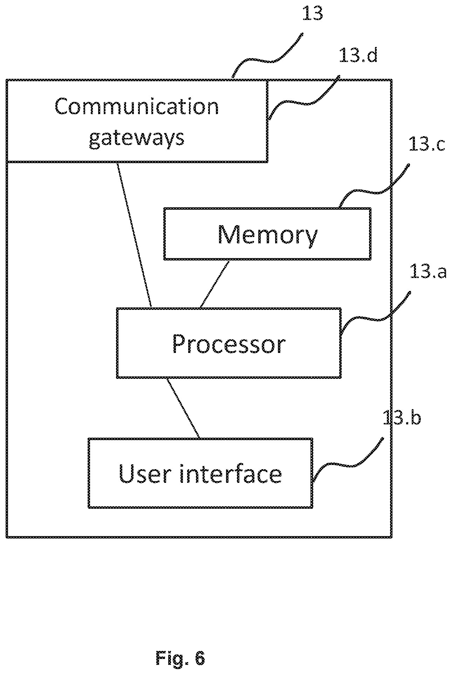

Fig. 6 shows a control unit 13, including components such as a processor 13.a, a user interface 13.b, a memory 13.c and communication gateways 13.d.

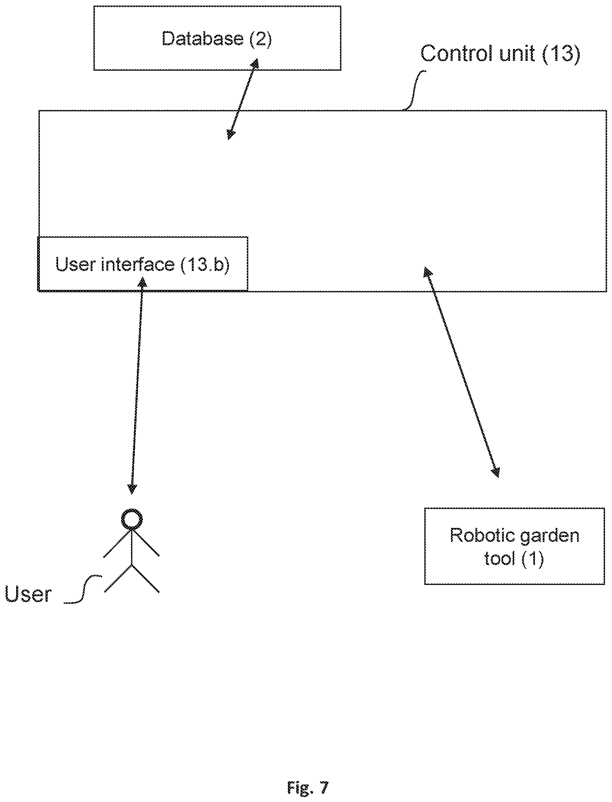

Fig. 7 shows a user interface 13.b of a control unit 13, a database 2, a robotic garden tool 1, and a user. The database 2, the robotic garden tool 1, and the user being connected to a control unit 13.

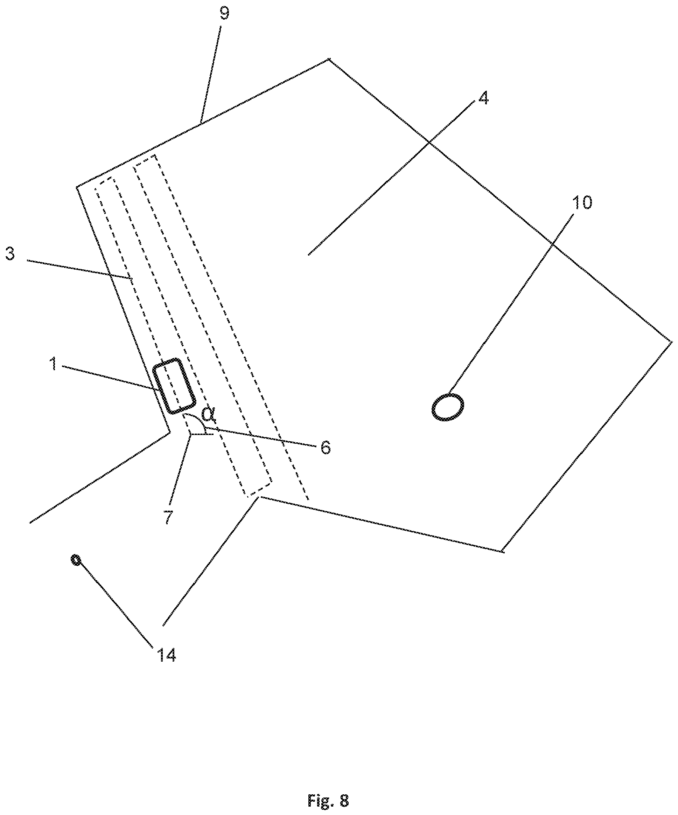

Fig. 8 shows a robotic garden system 15 and a robotic garden tool 1, in relation to a predetermined route 3, a working area 4, a travel angle 6, a starting point of the robotic garden tool 7, a boundary of the working area 9, an obstacle of the working area 10, and a predetermined position 14.

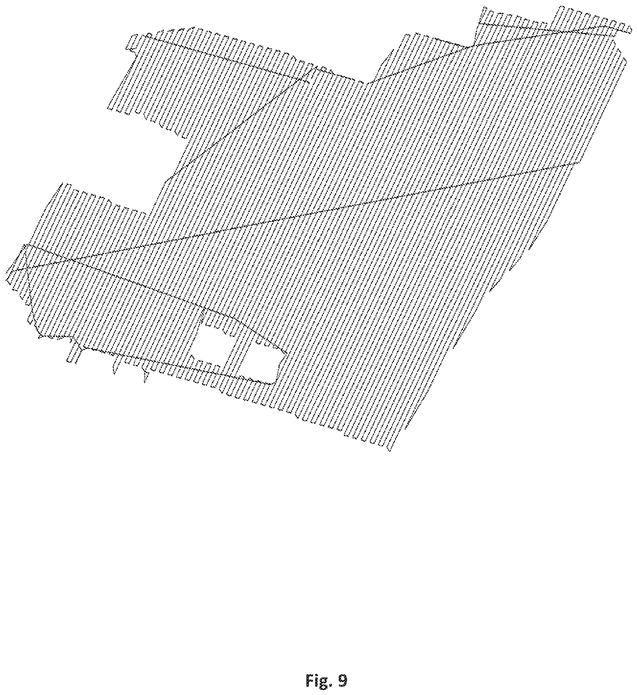

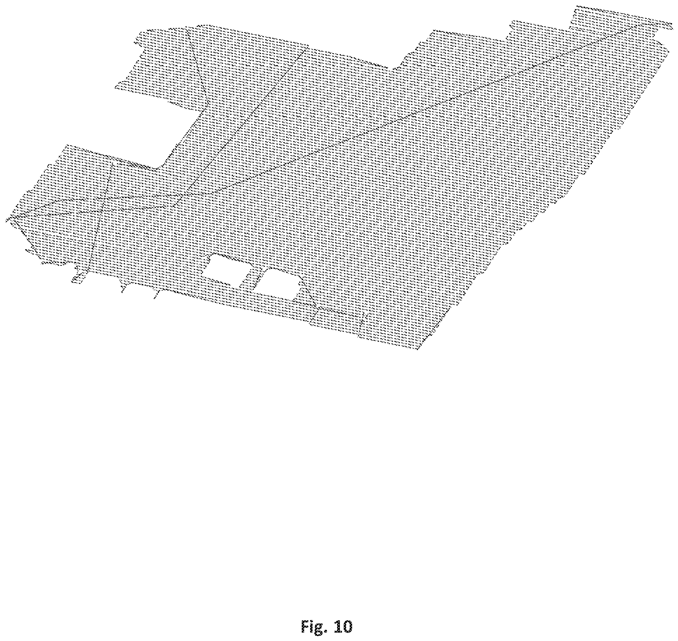

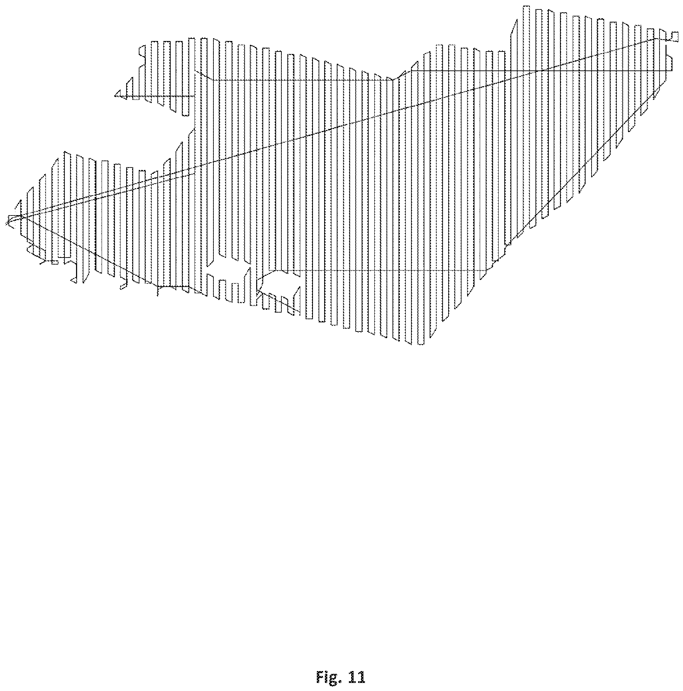

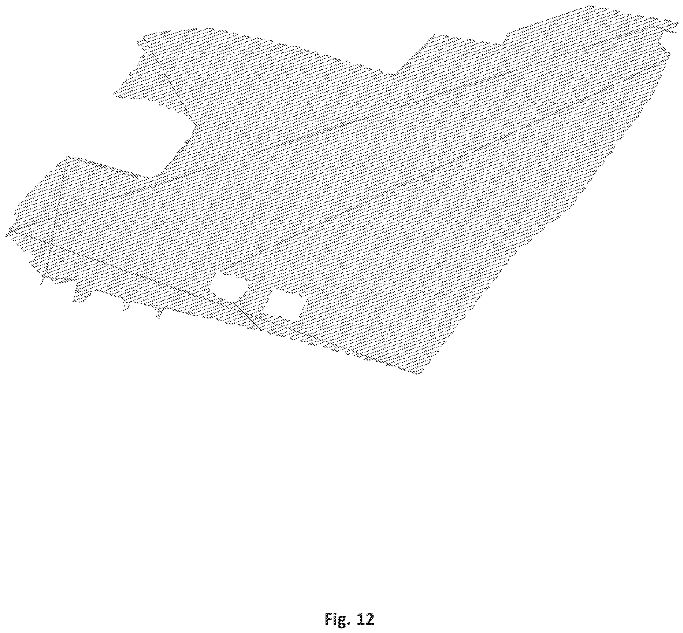

Fig. 9-12 show different types of predetermined routes based on different types of travel angles and different types of working widths of different robotic garden tools.

### LIST OF COMPONENTS

1 = robotic garden tool
2 = database
3 = predetermined route
4 = working area
6 = travel angle
7 = starting point of the robotic garden tool
9 = boundary of the working area
10 = obstacle of the working area
13 = a control unit
14 = predetermined position
15 = robotic garden system

## Claims

1. A method performed by a robotic garden system (15) for controlling a robotic garden tool (1), wherein the system (15) comprises the robotic garden tool (1), a control unit (13), and a database (2), wherein the method comprises the steps of:
A. retrieving, from the database (2) by means of the control unit (13), a predetermined route (3) for the robotic garden tool (1), wherein the predetermined route (3) is within a working area (4), wherein the predetermined route (3) is stored in a route data set in the database (2), wherein the predetermined route (3) is based on a travel angle (6), wherein the travel angle (6) is an angle extending from a starting point (7) for the robotic garden tool (1) located within the working area (4), and wherein the working area (4) delimits the travel of the robotic garden tool (1), wherein the route data set comprises a plurality of predetermined routes (3), and wherein each predetermined route (3) has a travel angle (6) substantially being different from all other travel angles of all other predetermined routes,
B. controlling by means of the control unit (13) the robotic garden tool (1) to start from the starting point (7) and move along the retrieved predetermined route (3),
**characterized in that** in the retrieving step of a predetermined route, the predetermined route (3) is selected based on a criterion of minimising the number of turns of the robotic garden tool (1) within the working area (4).

2. Method for controlling a robotic garden tool (1) according to claim 1, wherein the method is preceded by the steps of:
- defining the working area (4), and
- storing in the database (2) a plurality of geographical data points defining the working area (4).

3. Method for controlling a robotic garden tool (1) according to claim 2, wherein the method further comprises the step of:
- controlling the robotic garden tool (1) by means of the control unit (13) to follow the defined and stored working area (4) before conducting any further activities, such that the user can confirm that the stored working area (4) is correct.

4. Method for controlling a robotic garden tool (1) according to claim 2, wherein the defining of the working area comprises:
- defining the boundary (9) of the working area (4).

5. Method for controlling a robotic garden tool (1) according to claim 4, wherein the defining of the boundary step comprises:
- controlling the robotic garden tool (1) by means of the control unit (13) to follow the boundary (9) of the working area (4).

6. Method for controlling a robotic garden tool (1) according to claim 2, wherein the defining step of the working area comprises:
- defining the boundary (9) of an obstacle (10) of the working area (4).

7. Method for controlling a robotic garden tool (1) according to claim 1, wherein the travel angle (6) is in the range of 0 to 180° or in the range of 0 to 360°.

8. Method for controlling a robotic garden tool (1) according to claim 1-2, wherein a positioning unit is in combination with the control unit used for controlling the robotic garden tool to follow the retrieved predetermined route (3), and/or the positioning unit is used for providing a plurality of geographical data points so that the working area (4) can be defined.

9. Method for controlling a robotic garden tool according to claim 1, wherein the method further comprises to:
A. retrieve a signal by the control unit (13), wherein the signal indicates that the robotic garden tool (1) should move to a predetermined position (14),
B. store in the database (2) a geographical data point corresponding to the current geographical position of the robotic garden tool (1),
C. control the robotic garden tool (1) by means of the control unit (13) to move to the predetermined position (14),
D. control the robotic garden tool (1) by means of the control unit (13) to conduct a certain activity at the predetermined position (14),
E. control the robotic garden tool (1) by means of the control unit (13) to return to the geographical position corresponding to stored geographical data point after said certain activity at the predetermined position (14) has been completed, and
F. control the robotic garden tool (1) by means of the control unit (13) to continue to move along the retrieved predetermined route (3).

10. Method for controlling a robotic garden tool according to claim 4, wherein the controlling step of the robotic garden tool (1) to follow the retrieved predetermined route (3) comprises for the robotic garden tool (1) by means of the control unit (13) to:
A. move along the travel angle (6) in a straight line,
B. turn when reaching the boundary (9) of the working area (4),
C. move opposite the travel angle (6) in a straight line,
D. turn when reaching the boundary (9) of the working area (4),
E. move along the travel angle (6) in a straight line, and
F. continue with said steps,
such that the robotic garden tool (1) covers the working area (4) lane by lane.

11. A robotic garden system (15) for controlling a robotic garden tool (1), wherein the system (15) comprises the robotic garden tool (1), a control unit (13), and a database (2), wherein the system (15) is arranged to:
A. retrieve, from the database (2) by means of the control unit (13), a predetermined route (3) for the robotic garden tool (1), wherein the predetermined route (3) is within a working area (4), wherein the predetermined route (3) is stored in a route data set in the database (2), wherein the predetermined route (3) is based on a travel angle (6), wherein the travel angle (6) is an angle extending from a starting point (7) for the robotic garden tool (1) located within the working area (4), and wherein the working area (4) delimits the travel of the robotic garden tool (1), wherein the route data set comprises a plurality of predetermined routes (3), and wherein each predetermined route (3) has a travel angle (6) substantially being different from all other travel angles of all other predetermined routes,
B. control by means of the control unit (13) the robotic garden tool (1) to start from the starting point (7) and move along the retrieved predetermined route (3),
**characterized in that** the system is arranged for retrieving the predetermined route (3) by selecting the predetermined route (3) based on a criterion of minimising the number of turns of the robotic garden tool (1) within the working area (4).

12. A computer program, comprising computer readable code means, which when run on a control unit according to claim 12 causes the system (15) to perform the corresponding method according to any of the claims 1-10.

13. A computer program product, comprising a computer readable medium and a computer program according to claim 12, wherein the computer program is stored on the computer readable medium.

## Patentansprüche

1. Verfahren, das von einem Roboter-Gartensystem (15) zum Steuern eines Roboter-Gartengeräts (1) durchgeführt wird, wobei das System (15) das Roboter-Gartengerät (1), eine Steuereinheit (13) und eine Datenbank (2) umfasst, wobei das Verfahren die folgenden Schritte umfasst:
A. Abrufen aus der Datenbank (2) mittels der Steuereinheit (13) einer vorbestimmten Route (3) für das Roboter-Gartengerät (1), wobei die vorbestimmte Route (3) innerhalb eines Arbeitsbereichs (4) liegt, wobei die vorbestimmte Route (3) in einem Routendatensatz in der Datenbank (2) gespeichert ist, wobei die vorbestimmte Route (3) auf einem Fahrtwinkel (6) basiert, wobei der Fahrtwinkel (6) ein Winkel ist, der sich von einem Startpunkt (7) für das Roboter-Gartengerät (1), der sich innerhalb des Arbeitsbereichs (4) befindet, erstreckt, und wobei der Arbeitsbereich (4) die Fahrt des Roboter-Gartengeräts (1) begrenzt, wobei der Routendatensatz eine Vielzahl vorbestimmter Routen (3) umfasst, und wobei jede vorbestimmte Route (3) einen Fahrtwinkel (6) aufweist, der sich im Wesentlichen von allen anderen Fahrtwinkeln aller anderen vorbestimmten Routen unterscheidet,
B. Steuern des Roboter-Gartengeräts (1) mittels der Steuereinheit (13), um von dem Startpunkt (7) zu starten und sich entlang der abgerufenen vorbestimmten Route (3) zu bewegen,
**dadurch gekennzeichnet, dass** in dem Schritt des Abrufens einer vorbestimmten Route die vorbestimmte Route (3) basierend auf einem Minimierungskriterium der Anzahl von Kehrtwendungen des Roboter-Gartengeräts (1) innerhalb des Arbeitsbereichs (4) ausgewählt wird.

2. Verfahren zum Steuern eines Roboter-Gartengeräts (1) nach Anspruch 1, wobei dem Verfahren die folgenden Schritte vorausgehen:
- Definieren des Arbeitsbereichs (4) und
- Speichern einer Vielzahl geografischer Datenpunkte, die den Arbeitsbereich (4) definieren, in der Datenbank (2).

3. Verfahren zum Steuern eines Roboter-Gartengeräts (1) nach Anspruch 2, wobei das Verfahren weiter den folgenden Schritt umfasst:
- Steuern des Roboter-Gartengeräts (1) mittels der Steuereinheit (13), um vor dem Durchführen irgendwelcher weiterer Aktivitäten dem definierten und gespeicherten Arbeitsbereich (4) derart zu folgen, dass der Benutzer bestätigen kann, dass der gespeicherte Arbeitsbereich (4) richtig ist.

4. Verfahren zum Steuern eines Roboter-Gartengeräts (1) nach Anspruch 2, wobei das Definieren des Arbeitsbereichs Folgendes umfasst:
- Definieren der Grenze (9) des Arbeitsbereichs (4).

5. Verfahren zum Steuern eines Roboter-Gartengeräts (1) nach Anspruch 4, wobei das Definieren des Schritts der Grenze Folgendes umfasst:
- Steuern des Roboter-Gartengeräts (1) mittels der Steuereinheit (13), um der Grenze (9) des Arbeitsbereichs (4) zu folgen.

6. Verfahren zum Steuern eines Roboter-Gartengeräts (1) nach Anspruch 2, wobei der Schritt des Definierens des Arbeitsbereichs Folgendes umfasst:
- Definieren der Grenze (9) eines Hindernisses (10) des Arbeitsbereichs (4).

7. Verfahren zum Steuern eines Roboter-Gartengeräts (1) nach Anspruch 1, wobei der Fahrtwinkel (6) in dem Bereich von 0 bis 180° oder in dem Bereich von 0 bis 360° liegt.

8. Verfahren zum Steuern eines Roboter-Gartengeräts (1) nach Anspruch 1-2, wobei eine Positionierungseinheit in Kombination mit der Steuereinheit zum Steuern des Roboter-Gartengeräts verwendet wird, um der abgerufenen vorbestimmten Route (3) zu folgen, und oder die Positionierungseinheit dazu verwendet wird, eine Vielzahl geografischer Datenpunkte derart bereitzustellen, dass der Arbeitsbereich (4) definiert werden kann.

9. Verfahren zum Steuern eines Roboter-Gartengeräts nach Anspruch 1, wobei das Verfahren weiter Folgendes umfasst:
A. Abrufen eines Signals durch die Steuereinheit (13), wobei das Signal angibt, dass sich das Roboter-Gartengerät (1) zu einer vorbestimmten Position (14) bewegen soll,
B. Speichern in der Datenbank (2) eines geografischen Datenpunkts, der der aktuellen geografischen Position des Roboter-Gartengeräts (1) entspricht,
C. Steuern des Roboter-Gartengeräts (1) mittels der Steuereinheit (13), um es an die vorbestimmte Position (14) zu bewegen,
D. Steuern des Roboter-Gartengeräts (1) mittels der Steuereinheit (13), um an der vorbestimmten Position (14) eine bestimmte Aktivität vorzunehmen,
E. Steuern des Roboter-Gartengeräts (1) mittels der Steuereinheit (13), um zu der geografischen Position zurückzukehren, die dem gespeicherten geografischen Datenpunkt entspricht, nachdem die bestimmte Aktivität an der vorbestimmten Position (14) abgeschlossen wurde, und
F. Steuern des Roboter-Gartengeräts (1) mittels der Steuereinheit (13), um die Bewegung entlang der abgerufenen vorbestimmten Route (3) fortzusetzen.

10. Verfahren zum Steuern eines Roboter-Gartengeräts nach Anspruch 4, wobei der Schritt des Steuerns des Roboter-Gartengeräts (1), um der abgerufenen vorbestimmten Route (3) zu folgen, für das Roboter-Gartengerät (1) mittels der Steuereinheit (13) Folgendes umfasst:
A. Bewegen entlang des Fahrtwinkels (6) in einer geraden Linie,
B. Wenden beim Erreichen der Grenze (9) des Arbeitsbereichs (4),
C. Bewegen dem Fahrtwinkel (6) entgegengesetzt in einer geraden Linie,
D. Wenden beim Erreichen der Grenze (9) des Arbeitsbereichs (4),
E. Bewegen entlang des Fahrtwinkels (6) in einer geraden Linie, und
F. Fortsetzen der Schritte derart,
dass das Roboter-Gartengerät (1) die Arbeitsfläche (4) Bahn für Bahn abfährt.

11. Roboter-Gartensystem (15) zum Steuern eines Roboter-Gartengeräts (1), wobei das System (15) das Roboter-Gartengerät (1), eine Steuereinheit (13) und eine Datenbank (2) umfasst, wobei das System (15) eingerichtet ist zum:
A. Abrufen aus der Datenbank (2) mittels der Steuereinheit (13) einer vorbestimmten Route (3) für das Roboter-Gartengerät (1), wobei die vorbestimmte Route (3) innerhalb eines Arbeitsbereichs (4) liegt, wobei die vorbestimmte Route (3) in einem Routendatensatz in der Datenbank (2) gespeichert ist, wobei die vorbestimmte Route (3) auf einem Fahrtwinkel (6) basiert, wobei der Fahrtwinkel (6) ein Winkel ist, der sich von einem Startpunkt (7) für das Roboter-Gartengerät (1), der sich innerhalb des Arbeitsbereichs (4) befindet, erstreckt, und wobei der Arbeitsbereich (4) die Fahrt des Roboter-Gartengeräts (1) begrenzt, wobei der Routendatensatz eine Vielzahl vorbestimmter Routen (3) umfasst, und wobei jede vorbestimmte Route (3) einen Fahrtwinkel (6) aufweist, der sich im Wesentlichen von allen anderen Fahrtwinkeln aller anderen vorbestimmten Routen unterscheidet,
B. Steuern des Roboter-Gartengeräts (1) mittels der Steuereinheit (13), um von dem Startpunkt (7) zu starten und sich entlang der abgerufenen vorbestimmten Route (3) zu bewegen,
**dadurch gekennzeichnet, dass** das System zum Abrufen der vorbestimmten Route (3) eingerichtet ist, indem es die vorbestimmte Route (3) basierend auf einem Minimierungskriterium der Anzahl von Kehrtwendungen des Roboter-Gartengeräts (1) innerhalb des Arbeitsbereichs (4) auswählt.

12. Computerprogramm, umfassend computerlesbare Codemittel, die, wenn sie auf einer Steuereinheit nach Anspruch 12 durchgeführt werden, das System (15) dazu veranlassen, das entsprechende Verfahren nach einem der Ansprüche 1-10 durchzuführen.

13. Computerprogrammprodukt, das ein computerlesbares Medium und ein Computerprogramm nach Anspruch 12 umfasst, wobei das Computerprogramm auf dem computerlesbaren Medium gespeichert ist.

## Revendications

1. Procédé réalisé par un système de jardinage robotisé (15) pour commander un outil de jardinage robotisé (1), dans lequel le système (15) comprend l'outil de jardinage robotisé (1), une unité de commande (13) et une base de données (2), dans lequel le procédé comprend les étapes consistant à :
A. récupérer, à partir de la base de données (2) au moyen de l'unité de commande (13), un itinéraire prédéterminé (3) pour l'outil de jardinage robotisé (1), dans lequel l'itinéraire prédéterminé (3) se trouve à l'intérieur d'une zone de travail (4), dans lequel l'itinéraire prédéterminé (3) est stocké dans un ensemble de données d'itinéraire dans la base de données (2), dans lequel l'itinéraire prédéterminé (3) est basé sur un angle de déplacement (6), dans lequel l'angle de déplacement (6) est un angle s'étendant à partir d'un point de départ (7) pour l'outil de jardinage robotisé (1) situé à l'intérieur de la zone de travail (4), et dans lequel la zone de travail (4) délimite le déplacement de l'outil de jardinage robotisé (1), dans lequel l'ensemble de données d'itinéraire comprend une pluralité d'itinéraires prédéterminés (3), et dans lequel chaque itinéraire prédéterminé (3) présente un angle de déplacement (6) sensiblement différent de tous les autres angles de déplacement de tous les autres itinéraires prédéterminés,
B. commander au moyen de l'unité de commande (13) l'outil de jardinage robotisé (1) pour qu'il parte du point de départ (7) et se déplace le long de l'itinéraire prédéterminé (3) récupéré,
**caractérisé en ce que** lors de l'étape de récupération d'un itinéraire prédéterminé, l'itinéraire prédéterminé (3) est sélectionné sur la base d'un critère de minimisation du nombre de tours de l'outil de jardinage robotisé (1) dans la zone de travail (4).

2. Procédé de commande d'un outil de jardinage robotisé (1) selon la revendication 1, dans lequel le procédé est précédé des étapes consistant à :
- définir la zone de travail (4), et
- stocker dans la base de données (2) une pluralité de points de données géographiques définissant la zone de travail (4).

3. Procédé de commande d'un outil de jardinage robotisé (1) selon la revendication 2, dans lequel le procédé comprend en outre l'étape consistant à :
- commander l'outil de jardinage robotisé (1) au moyen de l'unité de commande (13) pour qu'il suive la zone de travail (4) définie et stockée avant d'effectuer toute autre activité, de sorte que l'utilisateur peut confirmer que la zone de travail (4) stockée est correcte.

4. Procédé de commande d'un outil de jardinage robotisé (1) selon la revendication 2, dans lequel la définition de la zone de travail comprend :
- la définition de la délimitation (9) de la zone de travail (4).

5. Procédé de commande d'un outil de jardinage robotisé (1) selon la revendication 4, dans lequel la définition de l'étape de délimitation comprend :
- la commande de l'outil de jardinage robotisé (1) au moyen de l'unité de commande (13) pour qu'il suivre la délimitation (9) de la zone de travail (4).

6. Procédé de commande d'un outil de jardinage robotisé (1) selon la revendication 2, dans lequel l'étape de définition de la zone de travail comprend :
- la définition de la délimitation (9) d'un obstacle (10) de la zone de travail (4).

7. Procédé de commande d'un outil de jardinage robotisé (1) selon la revendication 1, dans lequel l'angle de déplacement (6) se situe dans la plage allant de 0 à 180 ° ou dans la plage allant de 0 à 360 °.

8. Procédé de commande d'un outil de jardinage robotisé (1) selon les revendications 1-2, dans lequel une unité de positionnement est en combinaison avec l'unité de commande utilisée pour commander l'outil de jardinage robotisé de manière à suivre l'itinéraire prédéterminé (3) récupéré, et/ou l'unité de positionnement est utilisée pour fournir une pluralité de points de données géographiques de sorte que la zone de travail (4) puisse être définie.

9. Procédé de commande d'un outil de jardinage robotisé selon la revendication 1, dans lequel le procédé comprend en outre :
A. la récupération d'un signal par l'unité de commande (13), dans lequel le signal indique que l'outil de jardinage robotisé (1) doit se déplacer vers une position prédéterminée (14),
B. le stockage dans la base de données (2) d'un point de données géographiques correspondant à la position géographique actuelle de l'outil de jardinage robotisé (1),
C. la commande de l'outil de jardinage robotisé (1) au moyen de l'unité de commande (13) pour qu'il se déplace vers la position prédéterminée (14),
D. la commande de l'outil de jardinage robotisé (1) au moyen de l'unité de commande (13) pour mener une certaine activité à la position prédéterminée (14),
E. la commande de l'outil de jardinage robotisé (1) au moyen de l'unité de commande (13) pour qu'il revienne à la position géographique correspondant au point de données géographiques stocké après que ladite certaine activité à la position prédéterminée (14) a été terminée, et
F. la commande de l'outil de jardinage robotisé (1) au moyen de l'unité de commande (13) pour qu'il continue à se déplacer le long de l'itinéraire prédéterminé (3) récupéré.

10. Procédé de commande d'un outil de jardinage robotisé selon la revendication 4, dans lequel l'étape de commande de l'outil de jardinage robotisé (1) pour qu'il suivre l'itinéraire prédéterminé (3) récupéré comprend que l'outil de jardinage robotisé (1) au moyen de l'unité de commande (13) :
A. se déplace le long de l'angle de déplacement (6) en ligne droite,
B. tourne en arrivant à la délimitation (9) de la zone de travail (4),
C. se déplace à l'opposé de l'angle de déplacement (6) en ligne droite,
D. tourne en atteignant la délimitation (9) de la zone de travail (4),
E. se déplace le long de l'angle de déplacement (6) en ligne droite, et
F. continue avec lesdites étapes,
de sorte que l'outil de jardinage robotisé (1) couvre la zone de travail (4) bande après bande.

11. Système de jardinage robotisé (15) pour commander un outil de jardinage robotisé (1), dans lequel le système (15) comprend l'outil de jardinage robotisé (1), une unité de commande (13) et une base de données (2), dans lequel le système (15) est conçu pour :
A. récupérer, à partir de la base de données (2) au moyen de l'unité de commande (13), un itinéraire prédéterminé (3) pour l'outil de jardinage robotisé (1), dans lequel l'itinéraire prédéterminé (3) se trouve à l'intérieur d'une zone de travail (4), dans lequel l'itinéraire prédéterminé (3) est stocké dans un ensemble de données d'itinéraire dans la base de données (2), dans lequel l'itinéraire prédéterminé (3) est basé sur un angle de déplacement (6), dans lequel l'angle de déplacement (6) est un angle s'étendant à partir d'un point de départ (7) pour l'outil de jardinage robotisé (1) situé à l'intérieur de la zone de travail (4), et dans lequel la zone de travail (4) délimite le déplacement de l'outil de jardinage robotisé (1), dans lequel l'ensemble de données d'itinéraire comprend une pluralité d'itinéraires prédéterminés (3), et dans lequel chaque itinéraire prédéterminé (3) présente un angle de déplacement (6) sensiblement différent de tous les autres angles de déplacement de tous les autres itinéraires prédéterminés,
B. commander au moyen de l'unité de commande (13) l'outil de jardinage robotisé (1) pour qu'il parte du point de départ (7) et se déplace le long de l'itinéraire prédéterminé (3) récupéré,
**caractérisé en ce que** le système est conçu pour récupérer l'itinéraire prédéterminé (3) en sélectionnant l'itinéraire prédéterminé (3) sur la base d'un critère de minimisation du nombre de tours de l'outil de jardinage robotisé (1) dans la zone de travail (4).

12. Programme informatique, comprenant un moyen de code lisible par ordinateur qui, lorsqu'il est exécuté sur une unité de commande selon la revendication 12, amène le système (15) à réaliser le procédé correspondant selon l'une quelconque des revendications 1-10.

13. Produit de programme informatique comprenant un support lisible par ordinateur et un programme informatique selon la revendication 12, dans lequel le programme informatique est stocké sur le support lisible par ordinateur.
